# EUROPÄISCHE PATENTSCHRIFT

(11) **EP 3 151 781 B1**
(45) Veröffentlichungstag und Bekanntmachung des Hinweises auf die Patenterteilung: **17.10.2018**
(21) Anmeldenummer: 15727331.9
(22) Anmeldetag: 22.05.2015
(51) Int. Cl.: A61C 13/00, B22C 7/02, A61C 13/08, B22C 9/08

(54) **DENTALRESTAURATIONSMODELL**
DENTAL RESTAURATION MODEL
MODELE DE RESTAURATION DENTAIRE

(30) Priorität: 05.06.2014 EP 14171268; 06.06.2014 EP 14171444
(43) Veröffentlichungstag der Anmeldung: 12.04.2017
(73) Patentinhaber: Ivoclar Vivadent AG, 9494 Schaan (LI)
(72) Erfinder: FOSER, Hans-Peter, CH-9496 Balzers (LI); VOIGT, Oliver, CH-9477 Trübbach (CH)
(74) Vertreter: Baronetzky, Klaus
(86) Internationale Anmeldenummer: PCT/EP2015/061410
(87) Internationale Veröffentlichungsnummer: WO 2015/185379

(56) Entgegenhaltungen:
- JP-A- 2011 167 726
- US-A- 4 081 019
- US-A- 4 161 208
- US-A1- 2008 142 183

## Beschreibung

Die Erfindung betrifft ein Dentalrestaurationsteil, gemäß dem Oberbegriff von Anspruch 1 sowie ein Dentalrestaurationsteil gemäß dem Oberbegriff von Anspruch 15.

Es ist seit langem bekannt, Dentalrestaurationen über Positivmodelle zu erstellen, die mit Gips vergossen werden. Nach dem Aushärten wird das Positivmodell entfernt, in der Regel ausgeschmolzen. Es besteht in der klassischen Technik aus Wachs, so das sich für das gesamte Verfahren der Begriff "Lost-Wax-Technik" eingebürgert hat.

Um mehrere Dentalrestaurationsmodelle in einem Zuge herstellen zu können, sind auch mehrere Positivmodelle erforderlich, die über sogenannte Anstiftkanäle oder Materialzubringer miteinander verbunden sind. Bei der fertigen Negativform können dann die Hohlräume für die Dentalrestaurationen gemeinsam und in einem Zuge befüllt werden.

Grundsätzlich sind derartige Verfahren beim Gießen von Dentalrestaurationsteilen ebenfalls üblich. Bei der Presstechnik ist zudem darauf zu achten, dass die erstellte Gipsmuffel eine ausreichende Festigkeit hat, damit es nicht zu sogenannten Muffelrissen kommt, die in der Regel zum Verlust der gesamten erstellten Dentalrestauration führen. Hierbei ist insbesondere die Wandstärke zwischen dem Außenrand der Muffel und der nächst benachbarten Stelle des Positivmodells beziehungsweise des zugehörigen Formhohlraums relevant. Diese sollte ein gewisses Maß, beispielsweise drei Zentimeter, nicht unterschreiten.

Andererseits will man aber nach Möglichkeit recht viele Dentalrestaurationen gleichzeitig herstellen, so dass besondere Mühe darauf verwandt wird, basierend auf einem sogenannten Muffeldorn, der in seiner Form dem späteren Presskanal entspricht, über eine entsprechende Anzahl und Anordnung von Materialzubringern oder Anstiftkanäle die Dentalrestaurationen nach der Art eines Wachsbaums zu verteilen.

Es ist mittlerweise ebenfalls seit langem bekannt, das Positivmodell per Rapid-Prototyping herzustellen und das so erstellte Modell als Basis für die Abformung zu verwenden. Ein Beispiel für eine derartige Lösung lässt sich der WO 95/28688 entnehmen.

Es ist auch bereits vorgeschlagen worden, die exakte Lage des Materialzubringers, seinen Winkel zum Positivmodell und den sogenannten Anstiftbereich, also den Bereich, an welchem Materialzubringer und Positivmodell aufeinander treffen, per Software zu optimieren. Eine in diesem Zusammenhang gute Lösung lässt sich der europäischen Patentanmeldung 14 171 268.7 entnehmen. Das sogenannte Anstiften erfolgt typischerweise schräg seitlich im Bereich der Okklusal- beziehungsweise Inzisalseite der Dentalrestauration.

Es ist aber auch bereits seit längerem bekannt, Rohlinge mit Farbgradienten zu verwenden, und dem zu erstellenden Zahn dann einen entsprechenden Farbverlauf zu geben.

Ein Beispiel hierfür ist die aus der EP 2 065 012 A1 bekannte Lösung, die bereits eine Verbesserung des ursprünglichen, ebenfalls von der vorliegenden Anmelderin entwickelten sogenannten Multipressverfahren darstellt.

Neben der Herstellung per Rapid-Prototyping ist es auch möglich, das Positivmodell mit dem zugehörigen Materialzubringer per Fräsen über eine CNC-Maschine zu erzeugen. Dies gelingt typischerweise dann, wenn die Strukturen des so zu erzeugenden Wachsbaums nicht zu komplex und verwinkelt sind, denn ab einer gewissen Komplexität kann der Fräser - auch bei Fünfachs-Fräsmaschinen - nicht an die richtige Stelle gelangen, um das erwünschte Fräsergebnis zu erzielen.

Typischerweise werden derartige Rohlinge aus bestimmten, gut fräsbaren aber auch gut ausbrennbaren Polymeren erzeugt, die aus dem Vollen gefräst werden, meist aus einer Scheibe mit einem Durchmesser von 98,5mm, die für eine Standard-Fräsaufnahme vorbereitet ist.

Derartige Scheiben können beispielsweise eine Stärke von 3cm haben, so dass auch die integrierte Fertigung eines Wachsbaums mit einer entsprechenenden Höhe möglich wäre, wenn nicht das vorstehend genannte Problem bestünde.

Typischerweise wird das Positivmodell zusammen mit seinem zugehörigen Materialzubringer oder Anstiftkanal, gerne in Kombination mit einem oder mehreren weiteren Positivmodellen gefräst.

Hierbei entsteht vergleichsweise viel verlorenes Material, denn die Nachbildung des Wachsbaums nimmt einen entsprechenden Raum der Rohlingsscheibe ein.

Ein weiteres Problem besteht bei der Realisierung von Formhohlräumen für Dentalrestaurationen mit der "Lost-Wax-Technik" darin, dass die hierfür verwendeten Muffeln teils überraschend zu Muffelrissen neigen. Das verlorene Material hat typischerweise einen größeren Wärmeausdehnungskoeffizienten als das umgebende Gipsmaterial.

US 2008/142183 A1 offenbart ein Dentalrestaurationsmodell, mit einem Positivmodell, einem Führungselement und einem Materialzubringer.

Bei einer nicht genau vorschriftsmäßig verlaufenden Erwärmung kann sich ein Materialpropfen bilden, der ein Herausfließen des Wachses zunächst behindert und aufgrund der unterschiedlichen Wärmeausdehnungskoeffizienten zu einen derart großen Überdruck im Formhohlraum führt, dass es zur Rissbildung kommt.

Demgegenüber liegt der Erfindung die Aufgabe zugrunde, ein Dentalrestaurationsmodell gemäß dem Oberbegriff von Anspruch 1 zu schaffen, das für die besonders effiziente, aber auch störungssichere Fertigung in Lost-Wax-Technik besonders gut geeignet ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass durch den Verzicht darauf, die Materialzubringer per Rapid-Prototyping herzustellen oder per CNC-Maschine zu fräsen, auch die entsprechende Fräsarbeit beziehungsweise Aufbauarbeit eingespart werden kann. Beim Fräsen aus einer Vollscheibe können die Dentalrestaurationsteile/Positivmodelle näher aneinander gerückt werden, so dass sich das vorhandene Material wesentlich besser ausnutzen lässt. Dies gilt im besonderen Maße für die Fertigung von einzelnen Kronen, die bislang je mit je einem Materialzubringer versehen sein mussten, dessen Volumen beispielsweise 30% der Krone betragen konnte. Typischerweise war der Materialzubringer auch von einer beträchtlichen Länge, wie beispielsweise 50% oder sogar 100% der Krone. Dies hielt benachbarte Kronen entsprechend auf Abstand, gerade bei der Realisierung von kompletten Wachsbäumen in der Rohlingscheibe.

Erfindungsgemäß wird nun auf das gemeinsame Herstellen zusammen mit dem Materialzubringer oder Anstiftkanal verzichtet. Es wird lediglich ein Führungselement bereitgestellt, das insbesondere kragenförmig sein kann. Dieses Führungselement kann entweder als eine Art wulsförmiger Stelle aus dem Anstiftbereich hervorragen, oder in das Positivmodell selbst eingearbeitet sein.

In beiden Fällen ist ein Aufnahmebereich für den Materialzubringer vorgesehen, der als Standard-Element aus konventionellen Wachs hergestellt sein kann und kurzerhand in den Aufnahmebereich hereingedrückt wird.

Typischerweise schmilzt konventionelles Wachs bereits bei 80°C, während der fräsbare Kunststoff für das Positivmodell typischerweise bei etwa 120°C schmilzt. Überraschend lässt sich durch die insofern geeignete Materialwahl die Propfbildung im Bereich des Anstiftkanals - und damit auch die Neigung zu Muffelrissen bei nicht perfektem Erwärmen der Muffel - deutlich reduzieren.

Neben der Materialersparnis des meist hochwertigen fräsbaren Polymermaterials für die Bereitstellung der Positivmodelle ergibt sich beim Fräsen durch die CNC-Maschine ein Zeitgewinn. Für die Bereitstellung der erfindungsgemäß ausgebildeten Materialzubringer lassen sich auch kurzerhand an sich bekannte Waxgeräte von beispielsweise von 2,5mm oder 3mm Stärke verwenden, die in vorteilhafter Ausgestaltung von Hand kurz durch Andrücken zwischen zwei Fingern mit einer Einführschräge versehen werden können. Konventionelles Wachs ist typischerweise bereits bei Raumtemperatur in gewissem Maße verformbar, so dass es sich besonders für die Bereitstellung der erfindungsgemäßen Materialzubringer eignet.

Es ist auch möglich, vorgefertigte und dann bevorzugt bereits mit einer Einführschräge versehene Materialzubringer, beispielsweise ebenfalls aus konventionellen Wachs zu verwenden, die dann bereits fertig konfektioniert sind und dann lediglich in den Aufnahmebereich des Führungselements eingesteckt werden müssen.

Die Einführschräge kann in beliebiger Weise als Konus auf dem Materialzubringer - und einem entsprechenden und hierzu passenden Konus des Führungslements - ausgebildet sein, oder aber auch in konvex gekrümmter Form an dem Materialzubringer vorliegen, wiederum bevorzugt mit entsprechend konkav ausgebildeter Form an dem Führungselement.

Es ist günstig, wenn die Innenseite des Führungselements und die zugehörige Außenseite des Materialzubringers zueinander passen. Dies verhindert, dass Gipspartikel dort eindringen können.

Wenn ein Freiraum zwischen dem Innenkonus und dem Außenkonus besteht, ist es günstig, wenn das Führungselement an seinem distalen Ende ringförmig gegen den Materialzubringer abdichtet.

Zwar wäre grundsätzlich auch ein stumpfes Anpressen des Materialzubringers an den Anstiftbereich des Positivmodells möglich. Erfindungsgemäß wesentlich ist es jedoch, dass eine Ausrichtung zwischen der Achse des Materialzubringers und dem Positivmodell der Dentalrestauration erfolgt. Die Ausrichtung kann beispielsweise in der Weise erfolgen, wie sie in der europäischen Patentanmeldung 14 171 268.7 beschrieben ist, auf die vollinhaltlich Bezug genommen wird.

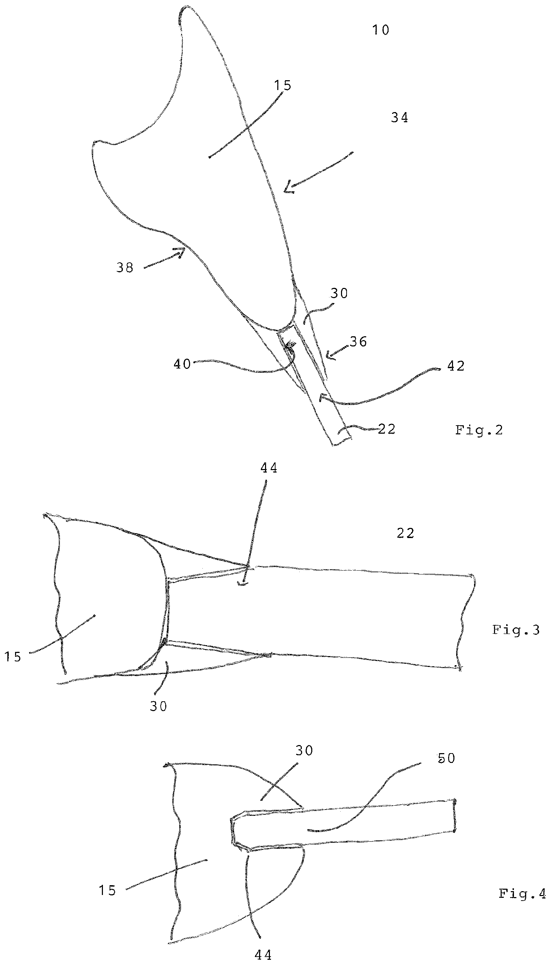

Das erfindungsgemäße Führungselement leistet eine Ausrichtgenauigkeit von +/- 2° bis 5° bei eine schlanken Ausgestaltung, wie sie beispielsweise in Fig. 2 dargestellt ist, oder aber zwischen 10° und 15° bei einer stummelartigen Ausgestaltung, wie sie beispielsweise in Fig. 3 dargestellt ist.

Das Führungselement legt insofern nicht nur den per CAD vorgegebenenen Anstiftbereich an dem Positivmodell fest, sondern zugleich auch die Ausrichtung des Materialzubringers relativ zum Positivmodell.

In vorteilhafter Ausgestaltung ist es vorgesehen, dass das Führungselement - gegebenenfalls zusammen mit dem Positivmodell - per Rapid-Prototyping oder per CAD/CAM aufgebaut ist und dass die Außenkontur des Führungselements (30) in Anpassung an das Positivmodell festgelegt ist und die Innenkontur (40) des Führungselements (30) als Standard, basierend auf der vorgegebenen Form des Materialzubringers (22 bis 28), festgelet it

In weiterer vorteilhafter Ausgestaltung ist vorgesehen, dass das Führungselement mindestens teilweise in dem Positivmodell aufgenommen ist und dass insbesondere der Materialzubringer in das Positivmodell eintaucht.

In weiterer vorteilhafter Ausgestaltung ist es vorgesehen, dass das Führungselement als Teil des Positivmodells aufgebaut ist, insbesondere einstückig mit dem Positivmodell ist.

In weiterer vorteilhafter Ausgestaltung ist es vorgesehen, dass das Führungselement an einer Okklusal- oder Inzisalseite einer Dentalrestauration angeordnet und rund ist.

In weiterer vorteilhafter Ausgestaltung ist es vorgesehen, dass das Führungselement an einer Mesial- oder Distalfläche einer Dentalrestauration angebracht ist und sich über einen wesentlichen Teil der gingivalen/okklusalen beziehungsweise der gingivalen/incisalen Höhe erstreckt, insbesondere über etwa die Hälfte, und dass insbesondere das Führungselement eine schlitzförmige Öffnung, und der Materialzubringer einen hierzu passenden quaderförmigen Aufbau hat.

Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1: eine schematische Darstellung eines erfindungsgemäßen Dentalrestaurationsmodells in Mehrfachanordnung, also mit mehreren Positivmodellen, in einer Ausführungsform;
- Fig. 2: eine schematische Darstellung eines Frontzahns als Positivmodell, unter Einbeziehung des erfindungsgemäßen Führungselement und des erfindungsgemäßen Materialzubringers, aus mesialer Richtung betrachtet;
- Fig. 3: eine weitere Ausführungsform eines Teils eines erfindungsgemäßen Dentalrestaurationsmodells, mit einem Positivmodell, dem Führungselement und dem Materialzubringer;
- Fig. 4: eine weitere Ausführungsform eines erfindungsgemäßen Dentalrestaurationsmodells;
- Fig. 5: eine perspektivische Seitenansicht eines erfindungsgemäßen Dentalrestaurationsmodells für die Bereitstellung des Multipressverfahrens in einer weiteren Ausführungsform der Erfindung; und
- Fig. 6: das Dentalrestaurationsmode!! gemäß Fig. 5, jedoch aus okklusaler Sicht betrachtet

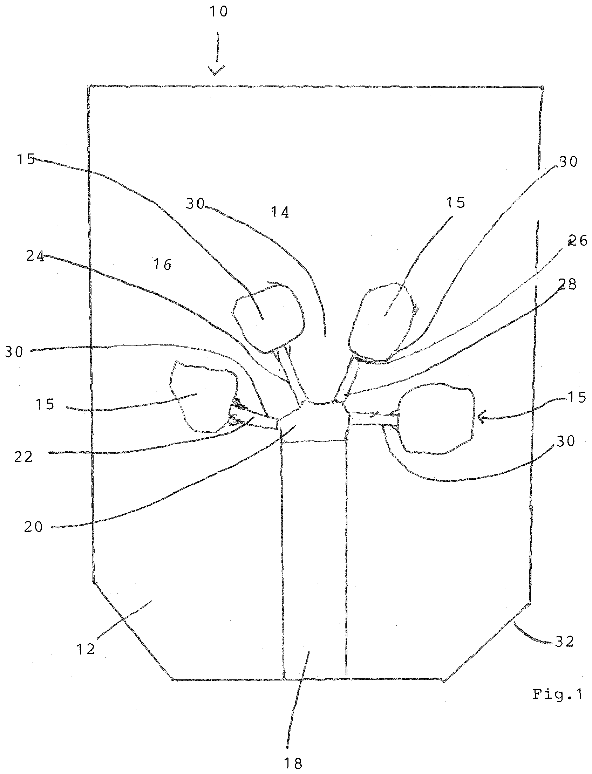

In Fig. 1 ist ein Dentalrestaurationsmodell 10 in Vierfachanordnung dargestellt, in der Weise, in welcher es in einer Muffel 12 typischerweise vorliegt. Die vier in Fig. 1 dargestellten Dentalrestaurationsmodelle 10 sind aus Gründen der einfacheren Darstellung in einer Ebene angeordnet dargestellt, wobei es sich versteht, dass ein sogenannter Wachsbaum 14, der die Dentalrestaurationsmodelle 10 trägt, tatsächlich dreidimensional gehalten sein kann.

Die Anordnung erfolgt so, dass ein Abstand 14 zwischen einzelnen Positivmodellen nicht unterschritten wird, aber auch keinesfalls ein Randabstand 16 zum Rand der Muffel 12. Beispielsweise kann der minimale Abstand 14 2cm und der minimale Randabstand 16 3cm betragen.

Die Muffel 12 verfügt in an sich bekannter Weise über eine Presskanal 18. Für die Bereitstellung der erfindungsgemäßen Dentalrestaurationsmodelle 10 vor dem Vergießen der Muffel 12 wird typischerweise ein sogenannter Aufwachsdorn an der Stelle eingebracht, an der später der Presskanal 18 zu liegen kommt. Auf der Spitze des Aufwachsdorns wird eine Aufwachsbasis 20 angebracht, und an dieser werden Materialzubringer 22, 24, 26 und 28 in geeigneter Weise befestigt. Sowohl die Aufwachsbasis 20 als auch die Materialzubringer 22 bis 28 bestehen aus konvektionellem Wachs.

Erfindungsgemäß werden nun Positivmodelle 15 je mit Führungselementen 30 auf die freien Enden der Materialzubringer 22 bis 28 aufgesteckt. Die Ausgestaltung von Führungsflächen der Führungselemente 30 ist so gewählt, dass sowohl die Position als auch der Winkel bezogen auf das je zugehörige Positivmodell 15 exakt festliegt.

Die Positivmodelle 15 sind in dem dargestellten Ausführungsbeispiel per CNC aus dem Vollen gefräst, können in einer modifizierten Ausführungsform jedoch auch per Rapid Prototyping hergestellt sein. Sie bestehen aus einem beliebigen geeigneten fräsbaren Wachs- oder Kunststoff, wie beispielsweise einem Polymer, wobei dessen Schmelzpunkt bevorzugt deutlich höher ist als der Schmelzpunkt der Aufwachsbasis 20 und der Materialzubringer 22 bis 28.

In diesem Zustand wird nun in an sich bekannter Weise eine geeignete Manschette über den Aufwachsdorn mit den Dentalrestaurationsmodellen 10 gestülpt und es erfolgt ein Vergießen mit Gips, zur Erzeugung der Muffel 12.

Nach deren Aushärten wird der Aufwachsdorn unter einer leichten Drehbewegung aus dem nunmehr ausgebildeten Presskanal 18 herausgezogen. Es erfolgt eine Erwärmung auf zunächst beispielsweise 90°C oder 100°C. In diesem Zustand verliert die Muffel verbleibende Restfeuchte, und zudem schmilzt sämtliches Wachs in den Bereichen der Materialzubringer 22 bis 28, aber auch an der Aufwachsbasis 20. Dieses fließt nun Vollständig über den Presskanal 18 ab, wobei die Muffel bei Bedarf gegebenenfalls leicht gekippt werden kann, um Reste herausfließen zu lassen.

Das Kippen ist übrigens durch den Konus 32, der an sich für die Erleichterung der Bedienung einer Ofenhaube in einem Pressofen dient, etwas vereinfacht.

Wenn das konventionelle Wachs vollständig ausgeflossen ist, wird die Muffel 12 weiter erwärmt, in an sich bekannter Weise beispielsweise über eine Ringheizung. Nunmehr schmilzt auch das Kunststoffmaterial in den Hohlräumen, die den Positivmodellen 15 entsprechen. Auch dieses fließt ab, wiederum gegebenenfalls erleichtert durch ein leichtes Kippen der Muffel 12 in geeigneter Weise.

Die Kombination eines frühschmelzenden Materialzubringers und eines spätschmelzenden Positivmodells ist deswegen besonders wichtig, da typischerweise von außen erwärmt wird, so dass die Wärme nach Überwindung des Randabstands 16 zunächst in der Außenkante in das betreffende liegende Positivmodell 15 eintritt und dieses dort zum schmelzen bringt.

Zu diesem Zeitpunkt ist das Material des zugehörigen Materialzubringers 22 - wenn er nicht aus konventionellem Wachs besteht - noch nicht geschmolzen, so dass durch die Wärmeausdehnung ein erheblicher Druck entsteht, der die Muffel vor der Erfindung zum Platzen bringen konnte; der harte Materialzubringer wirkte gleichsam wie ein Propf.

Dieses Problem ist nun erfindungsgemäß beseitigt.

Aus Fig. 2 ist ersichtlich, in welcher Weise ein Führungselement 30 ausgebildet sein kann. Es ist ein Frontzahn dargestellt, und das Führungselement 30 verläuft in der Verlängerung der Labialseite 34 des Frontzahns mit einer konischen Außenkontur 36.

Dies gilt in gleicher Weise für die Lingualseite 38 des Frontzahns und des Führungselements 30; auch hier verläuft die Außenkontur 36 in der Verlängerung der Lingualseite.

So entstehen keine Unstetigkeiten, die in Gips dann Rippen bilden könnten, die beim Pressen zum Bruch neigen können.

Das Führungselement 30 weist auch eine Innenkontur 40 auf, die genau zu dem betreffenden Materialzubringer 22 passt. Der Materialzubringer 22 ist in dem Aufnahmebereich 42 des Führungselements 30 eingeführt und liegt dort überall satt an. In dem in Fig. 2 dargestellten Ausführungsbeispiel besteht der Materialzubringer 22 kurzerhand aus einem Wachsdraht von 2,5mm Durchmesser, also ohne eine Einführschräge, und ist vorsichtig in das Führungselement 30 eingeführt. Auch bei Raumtemperatur ist das Führungselement 30 etwas härter als der Materialzubringer 22.

Der Materialzubringer 22 wird jedenfalls bis zum Anschlag an dem Postivmodell 15 eingeführt.

Die Außenkontur 36 des Führungselements 30 wird zahnspezifisch gestaltet, um den erwünschten stetigen Übergang zur Ausgestaltung des Positivmodells 15 zu erzielen. Die Innenkontur 40 ist hingegen vorgegeben und in der CAD-Datenbank entsprechend den verwendeten Materialzubringern 22 hinterlegt.

So ist es beispielsweise möglich, je nach Größe des betreffenden Positivmodells 15 auf einen Materialzubringer mit einer Stärke von 2,5mm oder 3mm auszuweichen, um dann später beim Pressen den Materialfluss ober den, dann entsprechend ausgebildeten Strömungswiderstand an die Erfordernisse anzupassen.

Auch wenn hier die Erfindung anhand eines Pressvorgang beschrieben ist, versteht es sich, dass sinngemäß entsprechende Lösungen auch bei Realisierung von Dentalrestaurationsteilen in der Gießtechnik möglich sind.

Aus Fig. 3 ist ersichtlich, in welcher Weise in einer modifizierten Ausgestaltung der Materialzubringer 22 und das Führungselement 30 mit einer Einführschräge 44 versehen sein kann. In dieser Ausführungsform ist das Führungselement 30 vergleichsweise kurz und erfordert dementsprechend einen noch geringeren Materialaufwand bei der Herstellung. Bevorzugt ist die Länge des Führungselements bezogen auf die Länge des Positivmodells zwischen einem Zwanzigstel und einem Drittel, besonders bevorzugt zwischen einem Zwölftel und einem Fünftel der Länge des Positivmodells.

Bei der Ausführungsform gemäß Fig. 4 ist es vorgesehen, das Führungselement 30 als integraler Teil des Positivmodells 15 auszubilden. Es wird kurzerhand ein entsprechend geformtes Sackloch 50 in dem Positivmodell 15 ausgebildet. Auch hier ist zur Erleichterung der Einführung auch die Realisierung einer Einführungsschräge 44 möglich.

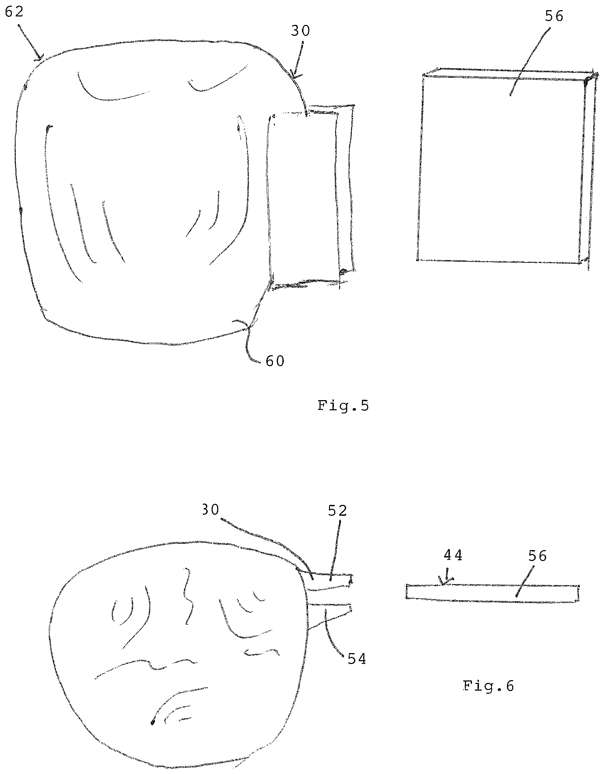

Aus Fig. 5 ist eine erfindungsgemäße Lösung zur Bereitstellung eines Dentalrestaurationsmodells 10 in Mulitpresstechnik dargestellt. Hier ist das Führungselement 30 durch zwei innen leicht konisch zu laufende Plattenstummel, die dafür bestimmt sind, den Materialzubringer 56 zwischen sich klemmend aufzunehmen. Bei der Multipresstechnik gemäß Fig. 5 und 6 wird ein Farbverlauf erzielt, von dunkleren Farbtönen im gingivalen Bereich zu transluzenteren Farbtönen im Okklusalbereich 62 des betreffenden Molaren.

Auch hier ist die Anordnung des Führungselements 30 per CAD so vorgegeben, dass die Materialzufuhr über den Materialzubringer 56 optimal vom Winkel her ausgerichtet ist; auch hier ist es günstig, dass der Materialzubringer 56 aus niedrig schmelzendem konventionellen Wachs besteht. Die in Fig. 6 angedeutete Einführschräge 44 ist fakultativ, erleichtert aber gegebenenfalls die Einführung, gerade bei einer stark klemmenden Ausgestaltung der Passung zwischen Führungselement 30 und Materialzubringer 56.

In einer nicht dargestellten alternativen Ausgestaltung ist zudem ein Höhenanschlag vorgesehen, der die relative Höhe in gingival/okklusaler Richtung des Materialzubringers 56 bezogen auf das Führungselement 30 exakt festlegt.

## Patentansprüche

1. Dentalrestaurationsmodell, mit einem Positivmodell (15) einer Dentalrestauration, welches Positivmodell (15) mindestens die Außenkontur (36) einer in Lost-Wax-Technik herzustellenden Dentalrestauration festlegt, wobei das Positivmodell (15) einen Anstiftbereich aufweist, der insbesondere nach einem vorgegebenen Optimierungsverfahren festgelegt ist, **dadurch gekennzeichnet, dass** der Anstiftbereich mit einem Führungselement (30) versehen ist, das einen Materialzubringer (22, 24, 26 und 28) aufnimmt und/oder führt, wobei der Materialzubringer (22, 24, 26 und 28) einen tieferen Schmelzpunkt als das Führungselement (30) und/oder das Positivmodell aufweist.

2. Dentalrestaurationsmodell nach Anspruch 1, **dadurch gekennzeichnet, dass** das Führungselement (30) kragenförmig ausgebildet ist und den Materialzubringer (22, 24, 26 und 28) mindestens teilweise umgibt.

3. Dentalrestaurationsmodell nach einem der vorhergehenden Ansprüche, **dadurch gekennzeichnet, dass** das Führungselement (30) den Materialzubringer (22, 24, 26 und 28) klemmend und insbesondere einrastend aufnimmt.

4. Dentalrestaurationsmodell nach einem der vorhergehenden Ansprüche, **dadurch gekennzeichnet, dass** das Führungselement (30) außen an dem Materialzubringer (22, 24, 26 und 28) anliegt und die Außenkontur (36) des Führungselements (30) und des Materialzubringers (22 bis 28) stetig, also ohne Unstetigkeitsstelle, ineinander übergeht.

5. Dentalrestaurationsmodell nach einem der vorhergehenden Ansprüche, **dadurch gekennzeichnet, dass** der Materialzubringer (22, 24, 26 und 28) zylinderförmig ausgebildet ist und das Führungselement (30) den Materialzubringer (22, 24, 26 und 28) kreisförmig oder mindestens teilkreisförmig umgibt.

6. Dentalrestaurationsmodell nach einem der vorhergehenden Ansprüche, **dadurch gekennzeichnet, dass** das Führungselement (30) eine Außenkontur (36) aufweist, die stetig, also ohne Unstetigkeitsstelle in die Außenkontur (36) des Positivmodells (15) der Dentalrestauration übergeht.

7. Dentalrestaurationsmodell nach einem der vorhergehenden Ansprüche, **dadurch gekennzeichnet, dass** das Führungselement (30) einen freiliegenden Aufnahmebereich für den Materialzubringer (22, 24, 26 und 28) aufweist, der eine Tiefe hat, die höchstens 80%, bevorzugt weniger als 40% und besonders bevorzugt etwa 20% der Länge des Materialzubringer (22, 24, 26 und 28) tief ist.

8. Dentalrestaurationsmodell nach Anspruch 7, **dadurch gekennzeichnet, dass** der Aufnahmebereich nach der Art eines Sacklochs ausgebildet ist und von dem Führungselement (30) kragenförmig und mindestens teilkreisförmig umgeben ist.

9. Dentalrestaurationsmodell nach einem der vorhergehenden Ansprüche, **dadurch gekennzeichnet, dass** das Führungselement (30) aus mindestens zwei Fingern besteht, die sich von dem Positivmodell (15) wegerstrecken und zwischen sich einen Aufnahmebereich bilden, in welchem ein Teil des Materialzubringers (22 bis 28) rastend und/oder klemmend einbringbar ist.

10. Dentalrestaurationsmodell nach einem der vorhergehenden Ansprüche, **dadurch gekennzeichnet, dass** der Materialzubringer (22, 24, 26 und 28) eine Einführschräge (44) aufweist, über welche er in einen Aufnahmebereich des Führungselements (30) erleichtert einführbar ist.

11. Dentalrestaurationsmodell nach einem der vorhergehenden Ansprüche, **dadurch gekennzeichnet, dass** das Führungselement (30) gegenüber dem Materialzubringer (22, 24, 26 und 28) seinem distalen Ende benachbart an diesem abdichtend anliegt.

12. Dentalrestaurationsmodell nach einem der vorhergehenden Ansprüche, **dadurch gekennzeichnet, dass** der Materialzubringer (22, 24, 26 und 28) aus einem Wachs mit einem Schmelzpunkt zwischen 50°C und 150°C besteht.

13. Dentalrestaurationsmodell nach einem der vorhergehenden Ansprüche, **dadurch gekennzeichnet, dass** der Materialzubringer (22, 24, 26 und 28) und das Führungselement (30) für den gesamten Verlauf der Eindringtiefe des Materialzubringers (22 bis 28) in das Führungselement (30) aneinander anliegen.

14. Dentalrestaurationsmodell nach einem der vorhergehenden Ansprüche, **dadurch gekennzeichnet, dass** das Positivmodell (15) mit einem Materialzubringer (22, 24, 26 und 28) verbunden ist oder an diesem anliegt und dass der Materialzubringer (22, 24, 26 und 28) aus einem Material mit einem tieferen Schmelzpunkt als dem Schmelzpunkt des Materials des Positivmodells (15) ausgebildet ist.

## Claims

1. A dental restoration model with a positive model (15) of a dental restoration, which positive model (15) at least defines the outer contour (36) of a dental restoration to be produced by lost wax casting technique, the positive model (15) having a pinning area, which is especially set according to a predetermined optimization process, **characterized in that** the pinning area is provided with a guiding member (30), which accommodates and/or guides a material feeder (22, 24, 26 and 28), wherein the material feeder (22, 24, 26 and 28) has a lower melting point than the guiding member (30) and/or the positive model.

2. The dental restoration model according to Claim 1, **characterized in that** the guiding member (30) is formed as a collar, and at least partially surrounding the material feeder (22, 24, 26 and 28).

3. The dental restoration model according to one of the preceding Claims, **characterized in that** the guiding member (30) clampingly and especially engagingly accommodates the material feeder (22, 24, 26 and 28).

4. The dental restoration model according to one of the preceding Claims, **characterized in that** the guiding member (30) abuts on the exterior side of material feeder (22, 24, 26 and 28) and the outer contours (36) of the guiding member (30) and the material feeder (22 to 28) constantly merge into one another, without any point of discontinuity.

5. The dental restoration model according to one of the preceding Claims, **characterized in that** the material feeder (22, 24, 26 and 28) is formed cylindrically, and the guiding member (30) circularly or at least partially circularly surrounds the material feeder (22, 24, 26 and 28).

6. The dental restoration model according to one of the preceding Claims, **characterized in that** the guiding member (30) has an outer contour (36), which constantly, i.e. without any point of discontinuity merge into the outer contour (36) of the positive model (15) of the dental restoration.

7. The dental restoration model according to one of the preceding Claims, **characterized in that** the guiding member (30) comprises an exposed accommodation area for the material feeder (22, 24, 26 and 28), which has a depth, which is at most as deep as 80%, preferably less than 40% and especially preferably about 20% of the length of the material feeder (22, 24, 26 and 28).

8. The dental restoration model according to Claim7, **characterized in that** the accommodation area is formed as a blind hole type and is surrounded by the guiding member (30) in a collar-type manner and is surrounded in an at least partially circular manner.

9. The dental restoration model according to one of the preceding Claims, **characterized in that** the guiding member (30) consists of two fingers which extend from the positive model (15), and forming an accommodation area between themselves, into which part of the material feeder (22 to 28) is engagingly and/or clampingly insertable.

10. The dental restoration model according to one of the preceding Claims, **characterized in that** the material feeder (22, 24, 26 and 28) comprises a lead-in chamfer (44), via which it is insertable into an accommodation area of the guiding member (30) with greater ease.

11. The dental restoration model according to one of the preceding Claims, **characterized in that** the guiding member (30) sealingly abuts opposite to the material feeder (22, 24, 26 and 28) adjacent to its distal end.

12. The dental restoration model according to one of the preceding Claims, **characterized in that** the material feeder (22, 24, 26 and 28) consists of a wax of a melting point between 50°C and 150°C.

13. The dental restoration model according to one of the preceding Claims, **characterized in that** the material feeder (22, 24, 26 and 28) and the guiding member (30) abut to each other on the entire path of the penetration depth of the material feeder (22 to 28) into the guiding member (30).

14. The dental restoration model according to one of the preceding Claims, **characterized in that** the positive model (15) is coupled to a material feeder (22, 24, 26 and 28) or abuts to said feeder and **in that** the material feeder (22, 24, 26 and 28) is formed of a material of a lower melting point than the melting point of the material of the positive model (15).

## Revendications

1. Modèle de restauration dentaire, avec un modèle positif (15) d'une restauration dentaire, lequel modèle positif (15) définit au moins le contour extérieur (36) d'une restauration dentaire à être produit en utilisant la technologie à cire perdue, où le modèle positif (15) présente une zone d'épinglage, qui est définie en particulier selon une procédure d'optimisation prédéterminée, **caractérisé en ce que** la zone d'épinglage présente un élément de guidage (30) qui reçoit et/ou guide un distributeur de matériau (22, 24, 26 et 28), où le distributeur de matériau (22, 24, 26 et 28) possède un point de fusion inférieur à celui de l'élément de guidage (30) et/ou le modèle positif.

2. Modèle de la restauration dentaire selon la revendication 1, **caractérisé en ce que** l'élément de guidage (30) prend la forme d'un collier et entoure au moins partiellement le distributeur de matériel (22, 24, 26 et 28).

3. Modèle de restauration dentaire selon l'une des revendications précédentes, **caractérisé en ce que** l'élément de guidage (30) reçoit le distributeur de matériel (22, 24, 26 et 28) par serrage et en particulier par encliquetage.

4. Modèle de restauration dentaire selon l'une des revendications précédentes, **caractérisé en ce que** l'élément de guidage (30) se trouve à l'extérieur contre le distributeur de matériel (22, 24, 26 et 28) et que le contour externe (36) de l'élément de guidage (30) et du distributeur de matériel (22-28) est parfaitement contigu, donc sans point de discontinuité.

5. Modèle de restauration dentaire selon l'une des revendications précédentes, **caractérisé en ce que** le distributeur de matériel (22, 24, 26 et 28) prend une forme cylindrique et l'élément de guidage (30) entoure le distributeur de matériel (22, 24, 26 et 28) de forme circulaire ou tout au moins de forme partiellement circulaire.

6. Modèle de restauration dentaire pour l'une des revendications précédentes, **caractérisé en ce que** l'élément de guidage (30) possède un contour externe (36), qui est parfaitement contigu, donc sans point de discontinuité, avec le contour externe (36) du modèle positif (15) de la restauration dentaire.

7. Modèle de restauration dentaire selon l'une des revendications précédentes, **caractérisé en ce que** l'élément de guidage (30) possède une zone d'accueil exposée pour le distributeur de matériel (22, 24, 26 et 28), dont la profondeur ne dépasse pas 80%, de préférence est inférieur à 40% et de manière particulièrement préférée autour de 20% de la longueur du distributeur de matériel (22, 24, 26 et 28).

8. Modèle de restauration dentaire selon la revendication 7, **caractérisé en ce que** la zone d'accueil est conçue à la manière d'un trou borgne et est entourée par l'élément de guidage (30) en forme de collier et de manière au moins partiellement circulaire.

9. Modèle de restauration dentaire selon l'une des revendications précédentes, **caractérisé en ce que** l'élément de guidage (30) se compose d'au moins deux doigts qui s'éloignent du modèle positif (15) et qui forment entre elles une zone de réception, dans laquelle une partie du distributeur de matériel (22-28) peut être insérée par serrage ou encliquetage.

10. Modèle de restauration dentaire selon l'une des revendications précédentes, **caractérisé en ce que** le distributeur de matériel (22, 24, 26 et 28) a un chanfrein d'introduction (44), par lequel son insertion dans une zone de réception de l'élément de guidage (30) est facilitée.

11. Modèle de restauration dentaire selon l'une des revendications précédentes, **caractérisé en ce que** l'élément de guidage (30) par rapport au distributeur de matériel (22, 24, 26 et 28) repose son extrémité distale adjacent à celui-ci, de manière à en assurer l'étanchéité.

12. Modèle de restauration dentaire selon l'une des revendications précédentes, **caractérisé en ce que** le distributeur de matériel (22, 24, 26 et 28) est composé d'une cire avec un point de fusion entre 50°C et 150°C.

13. Modèle de restauration dentaire selon l'une des revendications précédentes, **caractérisé en ce que** le distributeur de matériel (22, 24, 26 et 28) et l'élément de guidage (30) repose l'un contre l'autre sur toute la longueur de la profondeur de pénétration du distributeur de matériel (22-28) dans l'élément de guidage (30).

14. Modèle de restauration dentaire selon l'une des revendications précédentes, **caractérisé en ce que** le modèle positif (15) est connecté à un distributeur de matériel (22, 24, 26 et 28), ou repose contre celui-ci et que le distributeur de matériel (22, 24, 26 et 28) est réalisé à partir d'un matériau ayant un point de fusion inférieur au point de fusion du matériau du modèle positif (15).
